# EUROPEAN PATENT APPLICATION

(11) **EP 1 072 675 A2**
(43) Date of publication of application: **31.01.2001**
(21) Application number: 00306506.7
(22) Date of filing: 31.07.2000
(51) Int. Cl.: C11D 17/04, B65D 65/46, B32B 33/00, B32B 27/08

(54) **Detergent packaging**

(30) Priority: 30.07.1999 GB 9917767
(71) Applicant: Robert McBride Ltd, Middleton, Manchester M24 4DP (GB)
(72) Inventor: Bartlett, David, Cumbria LA14 3EJ (GB); Houghton, Mark Phillip Kentcliffe, Cumbria LA11 6DP (GB)
(74) Representative: Atkinson, Peter Birch

(57) **Abstract**

A detergent product, one of the uses of which is as a textile washing composition, which has a packaging that provides high resistance to moisture during storage yet a major part of which is dispersible in a solvent. The product includes a package of detergent material, wherein the packaging material fully encloses the detergent product and is comprised of a hydrophilic and a hydrophobic material. A detergent product is also described, which has a packaging material that is water soluble yet opaque, thus providing a detergent product that is soluble in water but which is not degraded by light before use.

## Description

The present invention relates to a detergent product contained within a packaging.

Detergent compositions are commonly available as solids or liquids, e.g. in the form of powders, tablets, pastes, fluids or doughs, and are packaged to protect the detergent from environmental factors such as humidity, oxygen and light.

The packaged detergent product may contain an amount of detergent composition sufficient for a single washing operation. The use of this type of packaging has several benefits for the consumer. Firstly, it enables detergents to be used more safely, as potential irritation caused by contact with the skin is avoided. Secondly, as the packaging contains a predetermined amount of detergent there is no need to measure the required amount of detergent to be used. thirdly, the packaging material may provide a barrier layer against humidity during storage of the product.

Packaging materials that are at least partially soluble in / permeable to the washing medium (typically water) are available and consequently the packaged detergent product may be used "as is" in the washing process whereby the packaging (or a portion thereof) dissolves or is permeable to allow the washing liquor to contact the detergent composition.

The detergent product can take the form of a detergent powder contained in an insoluble bag which has a single weld of a soluble polymer to seal the bag. Alternatively a packaging system using a normally water insoluble / impermeable substance that has been modified to become water permeable can he used. For example. WO-A-98/40464 discloses the use of a closed packaging system, using an orientated polypropylene film, which is insoluble in all major washing solvents and which has a water transmission rate of less than 20 g/m² in 24 hours.

However, detergent products that include an insoluble packaging element require that the insoluble element be recovered after the use of the product and some of the convenience of such a soluble package is lost.

More recently packaging materials that are completely soluble in the washing medium have been available.

For example, EP-A-0 700 989 discloses the use of a water soluble film of poly vinyl alcohol for a dishwasher detergent tablet, which allows water transport in excess of 50g/m² in 24 hours.

WO-A-98/30670 discloses a detergent powder in combination with a poly vinyl alcohol film packaging.

WO-A-92/20774 discloses a shaped detergent covered with a film coating, including a number of layers, based around poly vinyl alcohol, poly oxyethylene and poly vinyl acetate blends, having water transmission rates in excess of 50g/m² in 24 hours.

EP-A-0 716 144 discloses a tablet with a soluble polymer coating consisting of a poly acrylate based polymer, having a water transmission rate in excess of 50g/m² in 24 hours.

EP-A-0 593 952 discloses a bag in bag concept for sequentially delivering two detergent compositions. A method of obtaining differential solubility between the bags by varying the thickness of a soluble poly vinyl alcohol film is disclosed.

EP-A-0 481 547 discloses a tablet with an external layer, a barrier layer and a central core. the layers consisting of water soluble polymers, with water transmission rates of more than 50g/m² in 24 hours.

However, a major problem with water soluble packaging is that in storage it acts as a poor barrier layer against humidity, thus defeating one of the primary purposes of providing the packaging. In addition water soluble materials are often transparent and allow light to contact the detergent giving rise to discoloration of such compounds as anionic surfactant and optical brighteners. Secondary packaging and / or the avoidance of water and light sensitive components is therefore necessitated.

It is an object of the present invention to obviate or mitigate the abovementioned disadvantages.

According to a first aspect of the present invention there is provided a detergent product comprising a package of detergent material, wherein the packaging material fully encloses the detergent product and is comprised of a hydrophilic material and a hydrophobic material, at least a portion of said packaging being dispersible in a solvent.

Preferably a substantial portion of said packaging is dispersible in a solvent.

Preferably the packaging material is completely dispersible in a solvent. The solvent is preferably water.

It has been found that detergent products in accordance with the first aspect of the invention, whereby the detergent is enclosed in a packaging which is comprised of a hydrophilic and a hydrophobic material allows sufficient water transfer to the detergent to provide excellent in wash dissolution / disintegration properties yet also have excellent resistance to moisture before use. The detergent product has the additional benefit of allowing printing thereupon.

Preferably the water transfer through the packaging material thereof is less than 50g per square metre per day.

It is preferred that the breaking strength of a strip of the packaging material measuring 10cm x 1cm x 50µm is at least 20 Newtons and even more preferably at least 40 Newtons, and also that on contact with the cleaning medium it is preferred that the tensile strength of the packaging material falls by at least 50%. more preferably by at least 80% and most preferably by at least 90%. When dropped onto a hard surface it is preferred that the packaging material does not rupture when dropped from less than 5cm, more preferably from less than 10cm and most preferably from less than 15cm.

It is preferred that the packaging material thereof maintains at least 50%, more preferably at least 80% and most preferably at least 90% of its tensile strength when the detergent product is stored under conditions of 37°C and 70% humidity for one month.

The packaging material is preferably able to disperse at temperatures below about 50°C, more preferably below about 10°C, and most preferably at about 2°C.

It is preferred that in use the breach time of the packaging material is between 20 to 120 seconds, more preferably between 30 to 60 seconds and most preferably about 50 seconds. The term "breach time" is intended to mean the time taken from when the washing liquor contacts the detergent product to when an opening forms in the packaging material so that the detergent comes into contact with the washing liquor.

In a preferred form of the invention the hydrophilic and the hydrophobic materials are provided as layers, which may both be continuous or alternatively one of the layers may be continuous and the other of the layers may be discontinuous. It is preferred that where one of the layers is discontinuous, it is reticulate, e.g. in the form of a net. Furthermore, where one of the layers is discontinuous it is preferred that the hydrophobic layer is discontinuous.

Preferably the packaging material is composed of two layers, one hydrophilic and one hydrophobic layer. Optionally one or both of the hydrophilic and hydrophobic layers may be composed of sub-layers, but preferably each is formed of a single layer.

Optionally further layers may be added to create a packaging material having a sandwich structure. Where further layers are added it is preferred that the layers alternate between being substantially hydrophobic and substantially hydrophilic, e.g. a hydrophilic layer sandwiched between two hydrophobic layers.

Preferably the hydrophobic material layer has a thickness of 0.1-30µm, more preferably 1-10µm and most preferably 2-8µm. Preferably the hydrophilic material layer has a thickness of 10-5000µm, more preferably 10-1500µm, even more preferably 10-1000µm, even more preferably 10-600µm, even more preferably 10-500µm, even more preferably 30-200µm and most preferably 35-60µm.

The hydrophilic material may be any hydrophilic material as recognised by those skilled in the art. Preferred examples of such may be chosen from the group which includes vinyl alcohol polymer, poly vinyl acetate, an alpha-beta unsaturated carboxylic acid polymer, a branched or straight alkyl or aliphatic ester of an alpha-beta unsaturated carboxylic ester polymer, an oxy-alkylene polymer, a vinyl pyrrolidone, vinyl imidazole, N-vinyl imidazole, methyl vinyl imidazole, N-vinyl oxazolidone, vinyl pyridine-N-oxide, 4-vinyl-pyridine-N-oxide, vinyl pyrrolidone or vinyl pyridinium derivative polymer or copolymer thereof, a condensation polymer chosen from the group including gelatine, chitosan, starch, xanthan gum, carboxy-methyl cellulose, soluble alkoxy-cellulose, amine, amino substituted or di-carboxylic acid cross-linked variants of such condensation polymers, copolymers and mixtures thereof.

Generally, the hydrophilic layer of the packaging material will he comprised of a single material, in which case the hydrophilic layer most preferably comprises poly vinyl alcohol.

Poly vinyl alcohol, a polyhydroxy polymer having a polyethylene backbone with pendent hydroxy groups, is commonly produced by the hydrolysis of the respective poly vinyl acetate. It is preferred that where poly vinyl alcohol is included in the hydrophilic layer it is in the form of partially hydrolysed poly vinyl acetate. Preferably the level of hydrolysis is between 80% to 90%, more preferably between 83% to 89%, and most preferably between 87% to 89%. These compositions have been found to provide a high degree of chemical stability along with maximum tensile strength in a multi-layer packaging.

Optionally an outer or subsidiary hydrophilic layer can be applied to the hydrophilic layer (i.e. the hydrophilic layer is itself laminated) comprising poly vinyl alcohol in the form of a partially hydrolysed poly vinyl acetate having a preferred level of hydrolysis of more than 95%, more preferably between 97% to 99%, and most preferably between 98% to 99%. This composition has been shown to provide the most suitable protection from premature dissolution of the film and exposure of the highly alkaline material to operatives, transporters, or consumers.

It is preferred that the poly vinyl alcohol used as a main and / or subsidiary hydrophilic layer component has a number average molecular mass of between 20,000 to 200,000.

A multi-layered hydrophilic layer may be provided to give improved properties such as chemical resistance, oxygen barrier properties and strength. For example polymeric layers comprising a copolymer of monomeric alpha, beta unsaturated carboxylic acid and monomeric alkyl esters of an alpha, beta unsaturated carboxylic acid. ethyl acrylate-acrylic acid copolymer provide stability in reactive environments allowing extended storage prior to use without operator exposure of the packaged material, heightened stability to reactive environments such as high pH environments and additionally, this copolymer does not break down or degrade so as to become non aqueous soluble or dispersible.

Preferred unsaturated carboxylic acid monomers for making the carboxylic acid polymer may be chosen from the group including 1,4-vinyl benzoic acid. vinyl alcohol esters of dicarboxylic acids, methacrylic acid, acrylic acid. itaconic acid, iconatic acid, cinnamic acid, crotonic acid, mesaconic acid, carboxyethyl acrylic acid, maleic acid and fumaric acid.

The alkyl or aliphatic groups preferred to esterify the alpha-beta unsaturated carboxylic acid may be selected from the group including 5-22 carbon atom containing groups, e.g. hexyl, octyl, ethyl (hexyl), isodecyl and lauryl.

The hydrophilic layer may include polymers based upon N-vinyl imidazole, methyl vinyl imidazole, N-vinyl oxazolidone, vinyl pyridine-N-oxide, 4-vinyl-pyridine-N-oxide, vinyl pyrrolidone as they have the additional benefit of giving in-wash anti-dye transfer properties. When used in the packaging material molecular weights of the nitrogen containing polymers of more than 10.000 are preferred to achieve this purpose. However, if the primary function of the nitrogen containing polymer is to provide mechanical strength for the packaging, i.e. it composes more than 25wt% of the soluble layers wherein that layer is the primary contributor to packaging strength, molecular weights of greater than 50,000 are preferred.

For application in textile washing a hydrophilic layer containing poly vinyl pyrrolidone, vinyl imidazole, vinyl pyridinium, and carboxy methyl cellulose is particularly preferred as it is recognised that these compounds bring about secondary detergency benefits.

The hydrophilic layer may include a plasticiser to plasticise its component material.

The hydrophobic material may be any hydrophobic material as recognised by those skilled in the art. Preferred examples of such may be chosen from the group which includes polyethylene, propylene, polymeric ethylene derivatives, polymeric vinylidene chloride derivatives, polyester derivatives, a poly vinyl alcohol modified by amination, esterification, sililation or etherification, cellophane, methylated cellulose and polyamide, such as Nylon 6.6.

Most preferably the hydrophobic material of the packaging thereof is a polymeric vinylidene chloride derivative, or high or low density polyethylene or polypropylene. Where polyethylene or polypropylene are used molecular weights within the range of 10,000 to 1,000.000 are preferred.

The hydrophobic layer may include a plasticiser to plasticise its component material.

It is preferred that the packaging material is one to which a printed wording or coating may be applied. The method of printing may be any method as recognised by those skilled in the art. Preferred examples of such include ink-jet and flexo printing. The ink may be selected so as to be soluble or insoluble in an aqueous medium and may require an ink deposit layer.

The packaging material typically comprises a film, formed by laminating two films or by depositing one film on another as is known in the art, one of the films being hydrophilic and the other being hydrophobic. Preferred processes for applying the film to the detergent may be chosen from the group comprising melt forming processes such as calendaring; extrusion methods such as blown bubble, slot dye casting, and coating on a substrate; or by solution forming chemical regeneration methods such as emulsion forming, powder forming, co-casting, co-extrusion, extrusion laminating and blown extension. It is most preferred that the film is applied to the detergent in a conventional industrial flow wrapping machine such as those manufactured by Fuji or ACMA.

Optionally the packaging material incorporates a laminate binder.

The detergent product may be prepared with either the hydrophobic material layer as the outermost layer or the hydrophilic material layer as the outermost layer. It is recognised that the positioning of the layers can affect the storage properties and performance of the detergent product. When it is desired for the detergent product to have the lowest sticking properties on storage it is preferred that the hydrophobic layer is outermost. When it is desired for the detergent product to have the fastest solubility it is preferred that the hydrophilic layer is outermost.

If the hydrophilic layer is placed outermost, the optional application of a fine particulate material or varnish to the hydrophilic layer to avoid tackiness on contact with damp hands provides additional convenience to the consumer.

In a preferred embodiment of the first aspect of the invention the packaging material is opaque. Many detergent components are susceptible to light induced discoloration and / or decay. This can be disadvantageous not only from an aestethic point of view but also, more importantly, the efficacy of the detergent is decreased. The use of an opaque packaging is observed to greatly increase the detergent's resistance to light induced discoloration and decay before use.

The feature of opacity is an important aspect of the invention in its own right, therefore according to a second aspect of the present invention there is provided a detergent product comprising a package of detergent material, wherein the packaging material fully encloses the detergent product and is comprised of a water soluble opaque material, said packaging being dispersible in a cleaning medium.

All of the features of the first aspect of the present invention are applied *mutatis mutandis* to the second aspect of the present invention.

The water soluble packaging of the detergent product of the second aspect of the present invention may be provided by any of the hydrophilic materials described for use in the first aspect of the present invention.

As the packaging material is soluble, it has been found that detergent products in accordance with the second aspect of the invention provide excellent in wash dissolution disintegration properties. The detergent products also have excellent resistance to discoloration / decay before use because the opaque nature of the packaging does not allow light to influence the detergent. Additionally the packaging material can be printed upon.

The opacity of the packaging may be provided by any opacity means known by those skilled in the art. It is preferred that a metal layer in the packaging contributes to the opacity of the packaging. Preferred examples of a metal suitable for such a layer may be chosen from the group which includes iron, aluminium, copper, silver, gold and combinations thereof.

It is recognised by those skilled in the art that metallisation is a technique that can be used to lower the oxygen permeability of a packaging material. Where metallisation is used to provide the opacity of the packaging material it is preferred that the oxygen transfer through the packaging material is less than 250 cm³ per square metre per day.

Alternatively the opacity of the packaging may be provided by a layer of titanium dioxide in the packaging or the opacity of the packaging may be provided by printing.

Where printing is used as the method of providing the opacity to the packaging it is preferred that the opacity of the printed packaging is such that less than 10% of light of wavelength about 400nm is transmitted through the packaging and more preferably that less than 5% of light of wavelength about 400nm is transmitted through the packaging.

The ink may be any ink as known by those skilled in the art. It is preferred that the ink is not water soluble. The ink coverage on the packaging may be complete, alternatively the ink may be used to provide a pattern, washing instructions or a logo on the packaging.

The detergent in the product according to the invention may be used in any form as known by those skilled in the art. It is preferred that the detergent is in the form of a tablet, a liquid or a powder. Thus, for example the detergent product may contain a single tablet. Where a liquid formulation is used it may be aqueous or non-aqueous based. Non-aqueous based formulations may be based upon any fluid as recognised by those skilled in the art. Preferred examples of such may be chosen from the group which includes hydrocarbons, chlorocarbons, fluorocarbons, chlorofluorocarbons and dry cleaning liquids.

It is recognised by those skilled in the art that many hydrophilic materials are biodegradable. Bearing this in mind optionally the packaging material is in the form of a bottle, especially when the detergent is a liquid formulation. The bottle may have a replaceable cap and be used to dispense doses of a detergent or may be intended for a one use application. The cap may be provided by any of the hydrophobic or hydrophilic materials as described above.

The detergent material may he any detergent as recognised by those skilled in the art. The detergent may include a non-ionic, cationic, anionic or zwitterionic surfactant. Preferred examples of such may be chosen from the group which includes anionic surfactants such as alkyl benzene sulphonate, alkyl sulphates and sulphonates, alkyl ethoxy sulphates and sulphonates and non-ionic surfactants such as Lutensol A03 or A07 (available from BASF), Plurafac, LF404 and LF244 (available from BASF) and Dobanol 91-7 or 91-3 (available from Shell).

The detergent may include a co-agent. The co-agent may be any co-agent as recognised by those skilled in the art. Preferred examples of such may be chosen from the following group of materials: -
(1) Builders which remove water hardness including phosphates, zeolites, layered silicates, carbonates, amorphous silicates and poly-carboxylates.
(2) Bleaches including alkali metal (such as sodium and potassium) and other inorganic persalts, such as perborates, percarbonates and persulphates and halogen bleaches such as hypohalites.
(3) Bleach activators which are capable of reacting with hydrogen peroxide to generate peracetic acid as an active bleaching species, including compounds with aliphatic acyl groups having two or three carbon atoms, such as tetra-acetylethylene diamine (TAED), acetylated polyols, acetylated sugars such as penta acetyl glucose and fructose and acetylated sugar derivatives, such as acetylated sorbitol and mannitol.
(4) Enzymes including proteases, amylases, cellulases, oxidases, peroxidases and lipases, such as Savinase and Esperase (proteases), Termamyl (an amylase), and Guardzyme (a peroxidase) (all available from Novo Nordisk); Maxamyl (an amylase), Maxacal and Purafect (proteases) and Lipolase (a lipase) (all available from Genencor International); Peroxidase and Laccase (oxidases).
(5) Soil suspension agents including carboxy methyl cellulose.
(6) Anti-corrosion agents including disilicate.
(7) Sources of alkalinity including sodium carbonate and silicates.
(8) Crystal growth inhibitors including phosphonates.
(9) Anti-tarnishing agents including benzatriazole.
(10) Bleach scavengers including ammonium sulphate, sodium, potassium or ammonium glutamate and sodium or potassium bisulfite).
(11) Fillers including sodium chloride and sodium sulphate.
(12) Water and air.

Detergent products accordance with the invention have a variety of end uses, including: -
(1) Textile washing.
(2) Dish washing.
(3) Hard surface cleaning.
(4) Bleaches.

The packaging of the detergent product according to the present invention has a variety of functions, including any, all or any combination of the following: -
(a) Acting as a barrier to moisture ingress.
(b) Acting as an barrier to light.
(c) Being chemically stable on storage, meaning that the packaging must not degrade or erode over time when placed in storage even though in contact with alkaline solid or liquid compositions, halogen compounds, or other reactive materials such as acidic components. Furthermore, the hydrophilic portion of the packaging remains soluble and the hydrophobic portion remains dispersible.
(d) Acting to ensure that the chemical agent is contained within a package of adequate structural integrity.
(e) Serving as a rinse-aid therefore giving the possibility of reducing, or eliminating, the amount of a rinse aid which might otherwise preferably be employed in a composition for use in an automatic dishwasher.

The invention will be further illustrated by the following non-limiting Examples.

In the Examples the packaging materials of the following formulations were used: -
(A) Low density polyethylene film 50µm thick.
(B) Poly vinyl alcohol film of thickness 50µm (Aquafilm L711 available from Aquafilm).
(C) Film (B) coated with 5µm polyethylene (Aqualene 4357 available from Aquafilm).
(C*) Film (C) wherein the poly vinyl alcohol is sandwiched between two 5µm layers of polyethylene (Aqualene 4357 available from Aquafilm).
(D) Film (B) coated with 5µm poly vinylidene dichloride.
(E) Film (B) coated with 5µm poly methyl acrylate.
(F) Poly vinyl pyrrolidone (MW 150,000) film 50µm thick.
(G) Film (F) coated with 5µm polyethylene (Aqualene 4357 available from Aquafilm).
(H) 95% Poly vinyl pyrrolidone (MW 150,000) with 5% carboxymethyl cellulose, coated with 5µm polyethylene (Aqualene 4357 available from Aquafilm).

Formulations C-E,G and H are in accordance with the present invention, whereas formulations A,B and F are comparative examples.

A dishwashing tablet of the following composition was used: -

| Raw Material | Wt% |
|---|---|
| STP GL (available from Chemira) | 47.00 |
| Sodium Silicate (PYRAMID G80) | 25.00 |
| Sodium Carbonate (GRAN ASH) | 5.52 |
| Sodium Perborate (tetra-hydrate) | 12.00 |
| Esperase | 2.25 |
| Termamyl | 2.25 |
| Dequest 2041 | 0.40 |
| Benzotriazole | 0.40 |
| Palm Soap | 0.19 |
| Poly ethylene glycol (MW 5,000) | 0.19 |
| Silicone anti-foam | 0.10 |
| Non-ionic synperonic LFRA 260 | 3.00 |
| Water | to 100 |

Tablets were produced using a "Rotapress" available from BWI Manesty. A pressure of 150 MPa was used to produce the tablet of 20g average weight of parallelepiped shape with two external dimensions of 36mm and 25mm.

A textile washing tablet of the following composition was used.

| Raw Material | Wt% |
|---|---|
| Sodium Tripolyphosphate | 32 |
| Light Sodium Carbonate | To 100 |
| Sodium Perborate (tetra-hydrate) | 22 |
| Sodium Carboxymethyl Cellulose | 2 |
| TINOPAL DMS-X (Fluorescer) | 0.2 |
| TINOPAL CBS (Fluorescer) | 0.1 |
| Protease Enzyme | 0.7 |
| Amylase Enzyme | 0.7 |
| Cellulase Enzyme | 0.7 |
| Poly dimethyl siloxane | 0.4 |
| Sodium Silicate | 2 |
| Tetra Acetyl Ethylene Diamine | 3 |
| 7EO Alkyl Ethoxylate | 5 |
| Sodium Alkyl Benzene Sulphonate | 10 |
| 40% Sodium Silicate Solution (Binder) | 12 |
| Perfume | 0.5 |

The silicate is sprayed on to the powder whilst mixing under low shear in a ploughshare mixer, available from Lodige, to give a granular powder for agglomeration. This was then tableted at a pressure of 2000kPa to form a tablet of 44mm diameter and 50g weight.

In each case the tablets were then covered in a film coating and heat sealed to form an airtight covering such that the tablet was held loosely in a bag of similar size to the tablet.

### Example 1-Storage Capabilities-Dishwasher Tablet

Dishwashing tablets were produced as described above, containing the detergent as described above. The tablets were then stored for 1 month at 37°C and 70% relative humidity, before the strength of their external film was tested and the tablets were tested for appearance. The results of the tests are shown in Table 1.

**Table 1**

| Film | Strength at Break (Newtons) | Tablet Appearance |
|---|---|---|
| No film | N/A | Knobbly tablet surface of white silicate nodules |
| B | 20 26% lower strength | Knobbly tablet surface of white silicate nodules |
| C Hydrophobic outside | 39 7% lower tensile strength | No distortion of tablet surface visible |
| C Hydrophobic inside | 36 14% lower tensile strength | No distortion of tablet surface visible |
| C* | 47 2% lower tensile strength | No distortion of tablet surface visible |

The detergent tablet can interact with the protective film to reduce its strength, this is exacerbated by high moisture availability as high moisture itself can plasticise the film and reduce its strength. A poor film will lead to deterioration of the detergent tablet.

The tablet covered in film B deteriorated as much as an uncovered tablet, thus showing the poor performance of a purely hydrophilic water soluble packaging.

The laminate C (in both orientations) and the triple laminate C* gave good moisture protection and high strength retention over the storage period. For moisture to penetrate C* its outer and inner hydrophobic layers must be breached.

### Example 2-Film Tensile Strength Testing

The films for the tablets were stored at 20% relative humidity for 12 hours before being tested for tensile strength with an INSTRON 5543 computerised tensile strength testing machine using a 1cm wide film sample of length 10cm at an extension rate of 1cm in 30 seconds. The purpose of the test was to find the maximum that the film strip could endure during extension typically just before snap or sample necking. The results of the tests are shown in Table 2.

**Table 2**

| Film | Maximum load (Newtons) | Elongation at break (%) |
|---|---|---|
| A | 39 | 366 |
| B | 26 | 87 |
| C | 42 | 62 |
| D | 38 | 58 |
| E | 15 | 28 |
| F | 32 | 73 |
| G | 30 | 67 |

Films C-E show similar strength to film B (totally hydrophilic/water soluble material). Film G shows similar strength to film F (totally hydrophilic/water soluble material). All are of similar strength to film A (totally hydrophobic/water insoluble material).

For films C-E and G the elongation at break is lower than the films B and F, upon which they are based, as a result of reduced break propagation.

### Example 3-Water Permeability Testing

Water Permeability was measured in grams per square metre in over a 24 hour period under the conditions of 85% relative humidity and 23°C, using a Mocon (US) moisture vapour transmission rate meter (test method DIN 53122). The results of the tests are shown in Table 3.

**Table 3**

| Film | Water Vapour Transmission Rate g/m²/day |
|---|---|
| A | 8.0 |
| B | >50 |
| C | 15.1 |
| D | 14.1 |
| F | 14.7 |
| F | >50 |
| G | 16.7 |
| H | 16.3 |

Films B and F allow excessive water transfer, this will lead to deterioration of the detergent formulation. Films C-E and G-H have a smaller and more acceptable water transfer rate, this leads to good long term storage properties and also quick dissolution in the washing medium.

### Example 4-Wet Tensile Strength Testing

A droplet of water (0.25ml) was dropped onto a sample of film (as in Example 2) set up in the INSTRON 5543 apparatus with a guard to protect the underside of the film. The sample was left for two minutes before its tensile strength was measured as in Example 2. The results of the tests are shown in Table 4.

**Table 4**

| | Wet on hydrophobic side | | Wet on hydrophilic side | |
|---|---|---|---|---|
| Film | Maximum load (Newtons) | Elongation at break (%) | Maximum load (Newtons) | Elongation at break (%) |
| A | 39 | 360 | N/A | N/A |
| B | N/A | N/A | <1 | N/A |
| C | 42 | 63 | 2.0 | <20 |
| D | 38 | 58 | 2.1 | <20 |
| E | 37 | 58 | 1.3 | <20 |
| F | N/A | N/A | <1 | N/A |
| G | 32 | 73 | <1 | <10 |
| H | 30 | 67 | <1 | <10 |

Films C-E and G-H performed similarly to film A (totally hydrophobic water insoluble material) when wet on the hydrophobic side. Films C-E and G-H performed similarly to film B (totally hydrophilic/ water soluble material) when wet on the hydrophilic side. However, film A has been shown (Example 3) to have a low water transmission rate, leading to poor dispersion in use; also film B (and logically film F) has been shown (Example 1) to have poor storage properties. Therefore films C-E and G-H provide the best combination of storage properties yet are readily dispersible in use.

### Example 5-Storage Capabilities-Textile Washing Tablet

Textile washing tablets were produced as described above, containing the textile washing detergent as described above. The tablets were tested for protease enzyme content, using Skalar San plus system continuous flow air segmented auto analysis equipment and also for perborate content, using titrations to determine the "available oxygen" content, as described for hydrogen peroxide in Vogel, "Textbook of Quantitative Inorganic Analysis". Initial protease enzyme content was 0.73% and initial perborate content was 21.7%.

The tests were repeated after one month's storage at 37°C and 70% relative humidity. The results of the second set of tests are shown in Table 5.

**Table 5**

| | Hydrophobic side out | | Hydrophilic side out | |
|---|---|---|---|---|
| Film | Protease Content (%) | Perborate Content (%) | Protease Content (%) | Perborate Content (%) |
| A | 0.68 | 19.8 | N/A | N/A |
| B | N/A | N/A | 0.04 | 8.0 |
| C | 0.67 | 19.3 | 0.67 | 19.2 |
| D | 0.62 | 18.7 | 0.59 | 18.3 |
| E | 0.61 | 18.8 | 0.62 | 18.4 |
| F | N/A | N/A | 0.03 | 9.1 |
| G | 0.60 | 18.5 | 0.59 | 18.7 |
| H | 0.61 | 18.9 | 0.61 | 18.3 |

With the hydrophobic side out all of the films performed similarly. However, with the hydrophilic sides out films C-E and G-H exhibit far superior storage properties in that almost all of the perborate and the protease is still present in the detergent in comparison to the much lower contents in the detergent coated with packaging of film B or F

### Example 6-Storage Capabilities-Textile Washing Tablet

Tablets were prepared and stored as in Example 5. In this case storage of the tablets was carried out in pairs, with one tablet placed on top of one other (flat face to flat face). The tendency of the tablets to stick together after storage was determined by lifting one tablet and seeing if the one below was also lifted. The results of the tests are shown in Table 6.

**Table 6**

| Film | Hydrophobic side out | Hydrophilic side out |
|---|---|---|
| A | No adhesion | N/A |
| B | N/A | Adhesion |
| C | No adhesion | Adhesion |
| D | No adhesion | Adhesion |
| E | No adhesion | Adhesion |
| F | N/A | Adhesion |
| G | No adhesion | Adhesion |
| H | No adhesion | Limited adhesion |

Films C-E and G-H performed similarly to film A (totally hydrophobic/ water insoluble material) with the hydrophobic side out. Films C-E and G-H performed similarly to films B and F (totally hydrophilic/ water soluble material) with the hydrophilic side out. However, film A has been shown to have a low water transmission rate, leading to poor dispersion in use; also film B (and logically film F) has been shown to have poor storage properties. Therefore films C-E and G-H provide the best combination of storage properties yet are readily dispersible in use.

### Example 7-Rate of Solubility-Textile Washing Tablet

Tablets were prepared as in Example 5. Less than 3 days after preparation the tablets were placed singly in the middle of a load of 2kg of dry terry towelling a Hoover Ecologic Autowasher 100 de Luxe washing machine set on its "Main Wash" wash cycle at 40°C. At the cold water inlet, water hardness was 60PPM calcium.

The water was sampled from a recirculating tube attached at the bottom of the drum of the washing machine and circulating back in to the centre of the porthole through holes introduced in the machine at a recirculation rate of 2 litres per minute. Water samples of approximately 50ml were taken at intervals of two minutes during the wash.

The time taken from the beginning of the washing cycle until the conductivity of the sample water reached above 1000 Siemens was measured. This was taken as the time for the wrapped tablet contents to effectively start dissolving. The results of the tests are shown in Table 7.

**Table 7**

| | Hydrophobic side out | Hydrophilic side out |
|---|---|---|
| Film | Time to dissolve (minutes) | Time to dissolve (minutes) |
| A | >40 | N/A |
| B | N/A | 6 |
| C | 12 | 6 |
| D | 10 | 6 |
| E | 10 | 6 |
| F | N/A | 8 |
| G | 12 | 8 |
| H | 16 | 10 |

The detergent coated in packaging of film A (totally hydrophobic/water insoluble material) took an unacceptably large time to dissolve. All of the other films were very similar, showing that although the packaging films in accordance with the present invention are composed of a hydrophilic layer (water soluble) and a hydrophobic layer (water insoluble), which leads to excellent storage properties, the dissolution properties of a detergent coated with such films is not affected.

### Example 8-Print Transfer

A sample of films A, B and C were printed upon using a flexo process and also using a Linx 4022 ink jet printer with standard black ink. The surfaces were printed with the text 'TABLET' in bold 14 point Arial text on one side of the film.

The films were tested within an automatic dishwasher to simulate transfer printing, which can lead to consumer dissatisfaction. The test involved placing the film in contact with a porous porcelain surface (e.g. the back of a white wall tile). spraying the film with water (about 1ml per 10cm²), leaving for 20 minutes and then drying at 80°C. The tile was also moistened in all cases to allow wetting with film C. After the tile was rinsed with large volumes of water until all the polymer had been removed, the evidence of transfer printed text was recorded for both types of printing and for the film facing the tile and facing away from the tile. The results of the tests are shown in Tables 8a-8d.

**Table 8a-**

| **Flexo print. Facing the tile** | | |
|---|---|---|
| Film | Hydrophobic side in contact with tile | Hydrophilic printed side out |
| A | No transfer | NA |
| B | NA | Clear transfer |
| C | No transfer | Clear transfer |

**Table 8b-**

| **Flexo print. Facing away from the tile** | | |
|---|---|---|
| Film | Hydrophobic side in contact with tile | Hydrophilic printed side out |
| B | N/A | Clear transfer (some patchiness) |
| C | No transfer | Very limited transfer as a few small spots. |

**Table 8c-**

| **Ink jet print. Facing the tile** | | |
|---|---|---|
| Film | Hydrophobic side in contact with tile | Hydrophilic printed side out |
| A | No transfer | N/A |
| B | N/A | Clear transfer |
| C | No transfer | Clear transfer |

**Table 8d-**

| **Ink jet print. Facing away from the tile** | | |
|---|---|---|
| Film | Hydrophobic side in contact with tile | Hydrophilic printed side out |
| B | N/A | Limited transfer as a number of blotches. |
| C | No transfer | No transfer, some small spots. |

When facing away from the tile film C has a lower print transfer than film B for when the hydrophilic printed side is out. When the hydrophobic printed side is out film C exhibits no print transfer, similar to film A. As film A is not soluble film C appears to offer the best compromise of solubility and low print transfer. It was observed that when an ink-jet printer was used the print transfer is lower and also that print transfer from a hydrophobic surface is lower.

### Example 9-Print Clarity on Storage

Films B and C were printed on their poly vinyl alcohol side using an ink jet printer (for example, as described in WO-A-97/35933) with a black water insoluble ink and a water soluble ink colour index number 20470 (Acid black 1 available from Warner Jenkinson), as described in the Colour Index, Society of Dyers and Colourists (UK).

The print was as a line 3cm wide with an adjacent clear areas. The film was measured for reflectance using a McBeth Colour Eye 3100 with a 2cm diameter viewing aperture. The film was then stored for one month at 37°C and 70% relative humidity. After storage the reflectance as defined as L on the L*, a*, b*, CIElab (CIE 1976) colour scale; as described in "Colour Physics for Industry", R McDonald, Society of Dyers and Colourists; 1987, was measured.

Diffusion of the black printed area to the adjacent areas of clear film was evidenced by a decrease in the L value after storage and is reported as a percent change in L value. The distance of the diffusion of the dye from the original print line was measured using a microscope and a 0.1mm graticule. The results of the test are shown in Table 9.

**Table 9**

| | % Decrease in L value | |
|---|---|---|
| Film | Water insoluble ink | Water soluble ink |
| B | 4% | 17% |
| C | 5% | 14% |

These films exhibit a similar decrease in L value with the water insoluble ink and more limited diffusion and fading of a water soluble ink for film C. It illustrates the preference for a water insoluble ink.

### Example 10-Metallised Film

Films B and C were metallised using aluminium. The oxygen permeability of the metallised film was measured under the conditions of 0% relative humidity at 25°C using an Oxtran (US) oxygen permeability meter (test method ASTM 1434). Light transmission was also measured using a Pye Unicam UV/Visible spectrophotometer set at 420nm wavelength. The results of the test are shown in Table 10.

**Table 10**

| Film | Oxygen permeability cm³/ m² / 24 hours | Light transmission % |
|---|---|---|
| B | 300 | 87 |
| C | 280 | 82 |
| B Metallised | 29 | 0 |
| C Metallised (hydrophobic side) | 25 | 0 |

Film C exhibits a lower oxygen transfer rate both with and without metallisation.

### Example 11-Storage Capabilities-Metallised Film

100g of the textile washing composition as described above was placed on a glass petri dish with a layer of film over the top surface of the powder, which was held in place around the edge with an elastic band. The samples were left in bright sunlight for 5 days in a dry environment. The change in colour of the powder was measured at the end of this time using the methods as described in Example 9. The results of the test are shown in Table 11.

**Table 11**

| Film | Light Transmission (%) | Initial a Value | Final a Value | Change in a Value |
|---|---|---|---|---|
| None | 100 | -0.8 | 7.3 | 8.1 |
| Control in dark inside a metal tin | 0 | -0.8 | -0.5 | 0.3 |
| B | 87 | -0.8 | 6.5 | 7.3 |
| B Metallised | 0 | -0.8 | -0.5 | 0.3 |
| B Coated with water soluble white ink | 15 | -0.8 | 1.1 | 1.9 |
| B with 5% TiO₂ powder incorporated | 8 | -0.8 | 1.6 | 2.4 |
| C | 82 | -0.8 | 6.2 | 7.0 |
| C Metallised | 0 | -0.8 | -0.5 | 0.3 |

A high change in the "a" value denotes a large amount of yellowing of the powder. Film C when metallised exhibits a change in the "a" value of the powder that is as low as enclosing the powder in a metal box thus provides excellent light protection properties.

### Example 12-Utility of Bottle Made of Poly Vinyl Alcohol with Laminated Hydrophobic Coating

A 25ml poly vinyl alcohol bottle (available from Environmental Polymers UK Ltd) was coated on the inside with a 10µm coating of polyethylene in the same manner as film C. This enabled a bottle to be constructed that held an aqueous liquid in a convenient form which could be dosed from the bottle either by removing the bottle cap and pouring out the liquid or by simply throwing the bottle in a washing machine. The bottle has the advantage of being substantially biodegradable yet able to contain an aqueous liquid. Such a bottle would also he suitable for containing non-aqueous liquids

A composition comprising 20wt% liquid lauryl ether sulphate, 5wt% amine oxide, 5% sodium silicate, and the balance being made up by water was placed in the bottle. No bottle distortion was observed after being stored for 3 months at 20°C. In comparison a poly vinyl alcohol bottle without the 10µm coating of polyethylene coating distorted after 8 hours and burst after 1 days storage.

## Claims

1. A detergent product comprising a package of detergent material, wherein the packaging material fully encloses the detergent material and is comprised of a hydrophilic and a hydrophobic material, at least a portion of said packaging being dispersible in a solvent.

2. A detergent product according to claim 1, wherein a substantial portion, and preferably all of the, packaging is dispersible in a solvent.

3. A detergent product according to claim 1 or 2 wherein water transfer through the packaging material is less than 50g per square metre per day.

4. A detergent product according to any one of claims 1 to 3 wherein the breaking strength of a strip of the packaging material measuring 10cm x 1cm x 50µm is at least 20 Newtons more preferably at least 40 Newtons.

5. A detergent product according to any of claims 1 to 4, wherein the tensile strength of the packaging material falls by at least 50%, preferably at least 80% and more preferably at least 90%, on contact with the cleaning medium.

6. A detergent product according to any of claims 1 to 5, wherein the packaging material maintains at least 50%, preferably at least 80% and more preferably at least 90%, of its tensile strength when the detergent product is stored under conditions of 37°C and 70% humidity for one month.

7. A detergent product according to any of claims 1 to 6, wherein the hydrophilic and the hydrophobic material are provided as layers.

8. A detergent product according to claim 7, wherein the layers of material are continuous.

9. A detergent product according to claim 7, wherein at least one of the layers of material is continuous and the other is discontinuous, the hydrophilic layer preferably being the continuous layer and the hydrophobic layer preferably being the discontinuous layer.

10. A detergent product according any of claims 7 to 9, wherein the packaging material has one hydrophilic layer and one hydrophobic layer.

11. A detergent product according any of claims 7 to 9, wherein the packaging material has a hydrophilic layer, a hydrophobic layer and at least one further hydrophobic layer and/or hydrophilic layer, the hydrophobic and hydrophilic layers being arranged alternately to each other.

12. A detergent product according to any of claims 7 to 11, wherein the hydrophobic material layer has a thickness of 0.1-30µm, preferably 1-20µm and more preferably 2-8µm.

13. A detergent product according to any one of claims 7 to 12, wherein the hydrophilic material layer has a thickness of 10-5000µm, preferably 10-500µm and more preferably 35-60µm.

14. A detergent product according to any of claims 7 to 13, wherein the hydrophobic material layer is the outermost layer.

15. A detergent product according to any of claims 7 to 13, wherein the hydrophilic material layer is the outermost layer.

16. A detergent product according to any of claims 1 to 15, wherein the packaging material is in the form of film.

17. A detergent product according to any of claims 1 to 16, wherein the packaging material is in the form of a bottle.

18. A detergent product according to any one of claims 1 to 17, wherein the hydrophilic material is selected from the group comprising vinyl alcohol polymer, poly vinyl acetate, an alpha-beta unsaturated carboxylic acid polymer, a branched or straight alkyl or aliphatic ester of an alpha-beta unsaturated carboxylic ester polymer, an oxy-alkylene polymer, a vinyl pyrrolidone, vinyl imidazole, N-vinyl imidazole, methyl vinyl imidazole, N-vinyl oxazolidone, vinyl pyridine-N-oxide, 4-vinyl-pyridine-N-oxide, vinyl pyrrolidone or vinyl pyridinium derivative polymer or copolymer thereof, a condensation polymer chosen from the group including gelatine, chitosan, starch, xanthan gum, carboxy-methyl cellulose, soluble alkoxy-cellulose, amine, amino substituted or di-carboxylic acid crosslinked variants of such condensation polymers, copolymers and mixtures thereof.

19. A detergent product according to any one of claims 1 to 18, wherein the hydrophobic material is selected from the group comprising a polymeric ethylene or derivative, a polymeric propylene or derivative, a polymeric vinylidene chloride derivative, a polyester derivative, a poly vinyl alcohol modified by amination, esterification, sililation or etherification, cellophane, methylated cellulose and polyamide.

20. A detergent product according to any of claims 1 to 19, wherein the packaging material comprises a varnish layer.

21. A detergent product according to any of claims 1 to 20, wherein the packaging material can be printed upon.

22. A detergent product according to any one of claims 1 to 21, wherein the packaging material is opaque.

23. A detergent product comprising a package of detergent material, wherein the packaging material fully encloses the detergent material and is comprised of a water soluble opaque material, said packaging being dispersible in a cleaning medium.

24. A detergent product according to claim 23, wherein the packaging material is in the form of a laminated film.

25. A detergent product according to claim 23 or 24, wherein the packaging material is in the form of a bottle.

26. A detergent product according to any of claims 22 to 25, wherein a metal layer (preferably iron. aluminium, copper, silver, gold and combinations thereof) in the packaging material contributes to the opacity of the packaging.

27. A detergent product according to claim 24, wherein the metal layer reduces the oxygen transfer rate of the packaging material to less than 250cm³ per square metre per day.

28. A detergent product according to any of claims 22 to 27, wherein titanium dioxide in the packaging contributes to the opacity of the packaging.

29. A detergent product according to any of claims 22 to 28, wherein the opacity of the packaging is provided by printing.

30. A detergent product according to any one of claims 22 to 29, wherein the opacity of the packaging is such that less than 10%, preferably less then 5%, of light of wavelength 400nm is transmitted through the packaging

31. A detergent product according to any of claims 1 to 30, wherein the detergent is in the form of a tablet, a liquid or a powder.

32. A packaging for a detergent, having at least two components arranged substantially in layers, in which a portion of the layers are hydrophilic and a portion of the layers are hydrophobic, wherein a major part of the packaging is dispersible in a cleaning medium.
